Europäisches Patentamt

European Patent Office

Office européen des brevets

(11) Publication number: **0 298 052**
A1

## (12) EUROPEAN PATENT APPLICATION

(21) Application number: **88830275.9**

(51) Int. Cl.⁴: **B 63 B 1/38**

(22) Date of filing: **28.06.88**

(30) Priority: **01.07.87 IT 5348987**

(43) Date of publication of application:
**04.01.89 Bulletin 89/01**

(84) Designated Contracting States:
**AT BE CH DE ES FR GB GR IT LI LU NL SE**

(71) Applicant: **AKZO S.r.l.**
**Piazza Velasca, 5**
**I-20122 Milano (IT)**

(72) Inventor: **Solia, Franco**
**Via Petrella 4**
**I-20124 Milano (IT)**

(74) Representative: **Buzzi, Franco et al**
**c/o Jacobacci-Casetta & Perani S.p.A. Via Alfieri, 17**
**I-10121 Torino (IT)**

(54) **Motor boat.**

(57) A motor-boat (10) with a planing bottom (12) is provided with a plurality of dynamic openings (20) for drawing in and directing air between the bottom (12) and the liquid so as to reduce the resistance to the forward progress of the bottom (12).

FIG. 1

EP 0 298 052 A1

# Description

## A motor-boat

The present invention relates to a motor-boat of the type including a planing bottom.

It is known that a boat draws along with it as it moves a certain mass of water which is slowed by the surrounding fluid through laminar friction or turbulence. This phenomenon gives rise to the so-called wake which is essentially equivalent to a mass of water drawn along by the bottom. The wake contributes considerably to the resistance to the forward progress of the boat.

The object of the present invention is to provide a boat of the above type which enables the wake to be reduced and therefore enables the resistance to the forward progress of the boat to be reduced.

According to the invention, this object is achieved by virtue of the fact that the bottom is provided with a plurality of dynamic openings for directing air between the bottom and the liquid.

By virtue of this characteristic, a predetermined air flow is interposed between the bottom and the water which is flowing past the hull: thus, the water is no longer drawn along by the viscous contact between the bottom and the liquid, considerably decreasing the Reynolds number and the wake.

The dynamic openings are preferably connected to the bilge of the hull by means of tubes.

Thus, the vacuum in correspondence with the dynamic openings enables any water in the bilge to be eliminated.

Further characteristics and advantages of the boat according to the invention will become clear from the detailed description which follows with reference to the appended drawings, provided by way of non-limiting example, in which:

Figure 1 is a schematic side view of a boat according to the invention,

Figure 2 is a view taken on the arrow II of Figure 1, and

Figure 3 is a detail of Figure 1 on an enlarged scale.

With reference to the drawings, a motor-boat is generally indicated 10 and includes a V-shaped planing bottom 12, two screw propellers 14 and two steering rudders 16.

The bottom 12 has transverse steps 18 in correspondence with which dynamic openings 20 of a similar conformation to known self-bailers are situated.

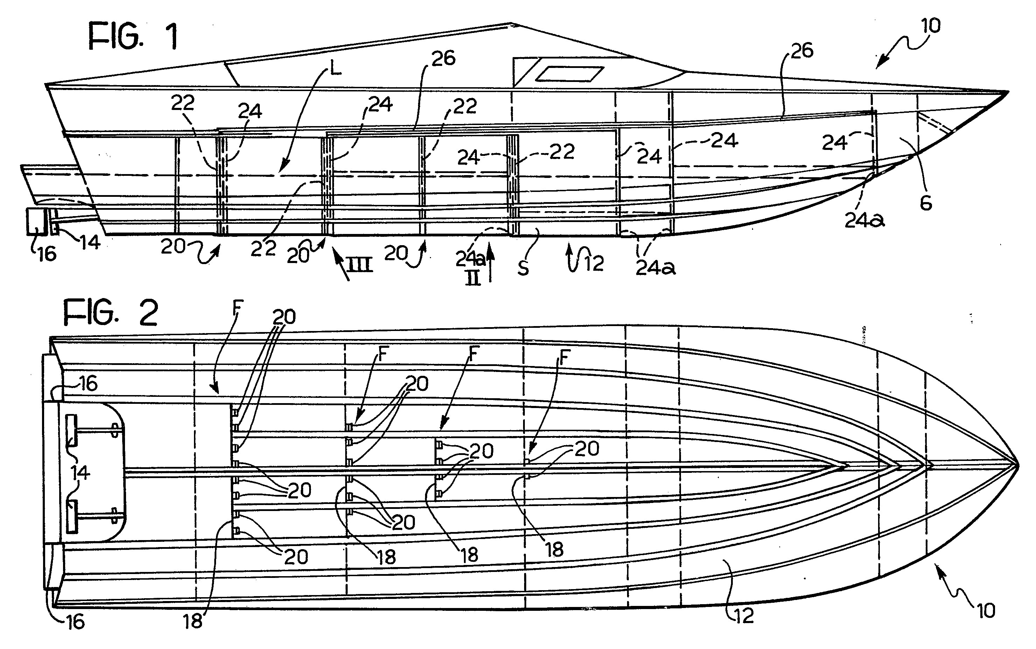

Each row of openings 20, indicated F in the drawings, is connected by means of vertical supply pipes 22 to an intake pipe 24 which terminates in an intake opening 24a situated in correspondence with the bilge S of the boat 10. The supply pipes 22 and the intake pipes 24 are connected to each other by means of substantially horizontal connecting pipes 26 situated at a higher level than the static waterline of the boat, indicated by a broken line L in Figure 1.

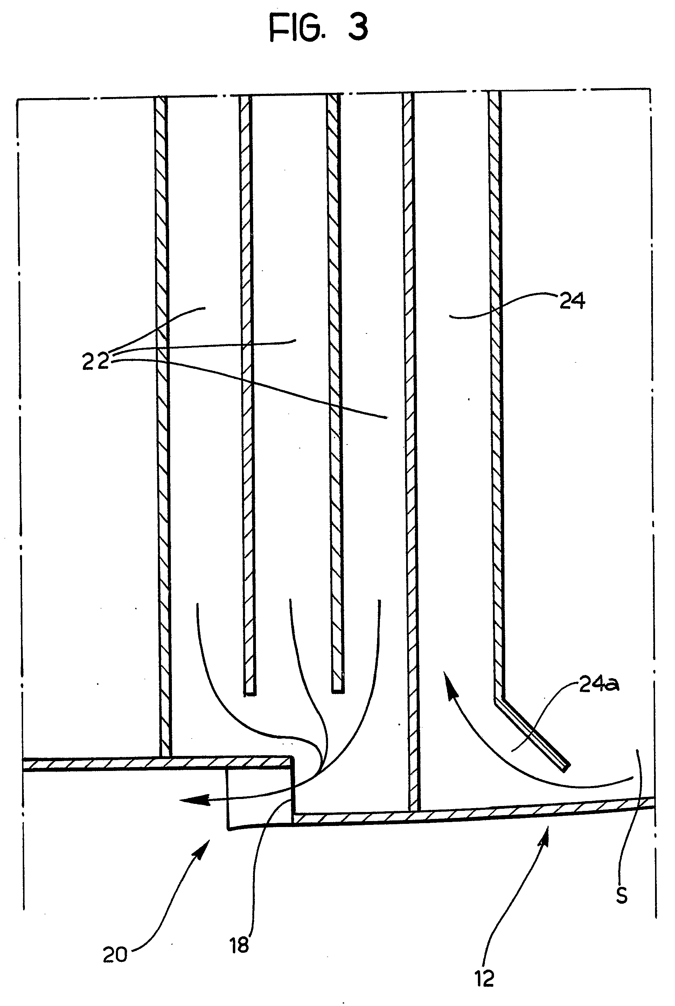

Each row F of dynamic openings 20 is connected to a region of the bilge S situated upstream of the row itself in the direction of travel of the boat 10. Moreover, each row F is adjacent an intake opening 24a operatively associated with a row F of dynamic openings 20 situated upstream thereof (Figure 3).

In the forward part of the hull, an intake opening 24a is associated with a forepeak G for housing the anchor chain (not illustrated).

When the boat 10 is planing, a vacuum is created in correspondence with the dynamic openings 20, which initially sucks any water present in the bilge S back through the intake openings 24a and then draws in a flow of air which is interposed between the bottom 12 and the layers of liquid, considerably reducing the resistance to forward progress.

Suitable non-return valves may be associated with the dynamic openings 20 and the dynamic openings 20 may also be associated with boats having hulls with shapes appreciably different from that illustrated in the drawings.

## Claims

1. A motor-boat of the type including a planing bottom, characterised in that the bottom (12) is provided with a plurality of dynamic openings (20) for directing air between the bottom (12) and the liquid so as to reduce the resistance to the forward progress of the bottom.

2. A boat according to Claim 1, characterised in that the dynamic openings (20) are connected by means of pipes (22, 26, 24) to the bilge (S) of the hull.

3. A boat according to Claim 1 or Claim 2, characterised in that the dynamic openings (20) are situated in the bottom (12) in transverse rows perpendicular to the keel.

4. A boat according to Claim 3, characterised in that the openings (20) are situated in correpsondence with transverse steps (18) in the bottom (12).

5. A boat according to any one of the preceding claims, characterised in that each pipe for connecting the dynamic openings (20) to the bilge (S) comprises a first substantially vertical section (22), a second substantially horizontal section (26) situated at a higher level than the waterline (L) of the hull, and a third substantiallly vertical section (24).

6. A boat according to any one of the preceding claims, characterised in that a non-return valve is associated with each dynamic opening (20).

7. A boat according to any one of Claims 3 to 6, characterised in that each row (F) of dynamic openings (20) is connected to regions of the bilge (S) of the hull situated upstream of that row in the direction of travel of the hull.

8. A boat according to any one of Claims 3 to 7, characterised in that each row (F) of dynamic openings (20) is adjacent an intake opening (24a) to the bilge (S), which is operatively associated with another row (F) of dynamic openings (20) situated upstream in the direction of travel of the hull.

0298052

FIG. 1

FIG. 2

FIG. 3

0298052

| Category | Citation of document with indication, where appropriate, of relevant passages | Relevant to claim | CLASSIFICATION OF THE APPLICATION (Int. Cl.4) |
|---|---|---|---|

**DOCUMENTS CONSIDERED TO BE RELEVANT** — EP 88830275.9

| Category | Citation of document with indication, where appropriate, of relevant passages | Relevant to claim | CLASSIFICATION OF THE APPLICATION (Int. Cl.4) |
|---|---|---|---|
| X | DE - A1 - 3 208 884 (DYNAMIT WINDSURFING GMBH)<br>  * Fig. 1,2 *<br>  -- | 1,2,3,4,7 | B 63 B 1/38 |
| X | EP - A1 - 0 105 819 (ATELIERS ET CHANTIERS DE LA MANCHE)<br>  * Totality *<br>  -- | 1,2,3,4,7 | |
| X | FR - A1 - 2 591 180 (GUIBERNAD)<br>  * Totality *<br>  ---- | 1,2,6 | |

TECHNICAL FIELDS SEARCHED (Int. Cl.4)

B 63 B

The present search report has been drawn up for all claims

| Place of search | Date of completion of the search | Examiner |
|---|---|---|
| VIENNA | 15-09-1988 | SCHMICKL |